Europäisches Patentamt

European Patent Office

Office européen des brevets

(19)

(11) Numéro de publication: **0 100 285**
**B2**

(12) **NOUVEAU FASCICULE DE BREVET EUROPEEN**

(45) Date de publication du nouveau fascicule du brevet:
22.03.89

(21) Numéro de dépôt: 83420105.5

(22) Date de dépôt: **28.06.83**

(51) Int. Cl.⁴: **B 01 D 13/04,** A 61 M 1/18,
D 01 D 5/24

(54) **Fibre creuse pour le traitement du sang.**

(30) Priorité: **01.07.82 FR 8211788**

(43) Date de publication de la demande:
**08.02.84 Bulletin 84/6**

(45) Mention de la délivrance du brevet:
**03.09.86 Bulletin 86/36**

(45) Mention de la décision concernant l'opposition:
**22.03.89 Bulletin 89/12**

(84) Etats contractants désignés:
**BE CH DE FR GB IT LI NL SE**

(56) Documents cités:
**DE-A- 2 631 499**
**FR-A- 2 196 184**
**FR-A- 2 421 656**
**US-A- 3 674 628**
**US-A- 4 056 467**

(73) Titulaire: **HOSPAL INDUSTRIE, 7, Avenue Lionel Terray,
F-69330 Meyzieu (FR)**

(72) Inventeur: **Angleraud, René, 35, rue des Géraniums,
F-69320 Feyzin (FR)**

(74) Mandataire: **Klingseisen, Franz, Dipl.-Ing. et al, Dr. F.
Zumstein Dipl.-Ing. F. Klingseisen Bräuhausstrasse 4,
D-8000 München 2 (DE)**

## Description

La présente invention concerne des fibres creuses semi-perméables de type symétrique, de structure microporeuse sensiblement uniforme en copolymère d'acrylonitrile pour le traitement du sang, ainsi qu'un procédé de fabrication.

Des fibres creuses de ce type ont déjà été décrites notamment dans le brevet américain no 4 056 467. Elles ont d'excellentes propriétés mécaniques ainsi que de remarquables caractéristiques de perméabilité pour la dialyse et l'ultrafiltration du sang. Elles sont obtenues par un procédé de coagulation avec précipitation du copolymère et extraction simultanée du solvant. Cependant il faut utiliser des quantités relativement importantes d'héparine pour éviter des dépôts d'éléments figurés du sang sur les parois internes de ces fibres creuses.

Par ailleurs avec des polymères tels que le polyméthacrylate de méthyle, on a obtenu des fibres creuses utilisables en hémodialyse et en hémofiltration à partir de procédés mettant éventuellement en œuvre une gélification thermoréversible généralement accompagnée d'une coagulation.

De tels procédés conduisent à des fibres creuses dont la surface interne n'est généralement pas très lisse à une échelle microscopique, ce qui peut entraîner des pertes de performances lors d'un fonctionnement in-vivo ou nécessiter l'emploi de quantités plus importantes d'héparine.

Un but de la présente invention est d'obtenir des fibres creuses qui ne présentent pas les inconvenients de l'art antérieur.

Un but essentiel de la présente invention est de proposer des fibres creuses qui présentent une hémocompatibilité sensiblement améliorée, c'est-à-dire qui, de par leur nature et leur microstructure ne favorisent pas l'accrochage à leur contact d'éléments figurés du sang susceptibles d'obstruer, voire de boucher complètement leurs canaux internes. En conséquence un but de l'invention est de permettre ainsi une circulation très régulière du sang, notamment en cours d'hémofiltration, où le taux d'hématocrite peut atteindre localement des valeurs élevées.

D'autres buts sont de réduire les risques d'embolie et de diminuer très sensiblement les doses d'héparine nécessaires aux traitements, ce qui représente aussi bien une sécurité accrue pour le patient (diminution des risques d'hémorragie) qu'une économie sensible.

Un autre but de la présente invention est de proposer des fibres creuses susceptibles d'offrir un ensemble de propriétés améliorées, tant sur le plan des propriétés mécaniques que sur le leur perméabilité à des constituants de différents poids moléculaires, pouvant aller jusqu'à 60 000 daltons et même davantage si nécessaire.

Un autre but de la présente invention est de proposer de telles fibres creuses présentant ainsi une efficacité et une fiabilité fonctionnement sensiblement améliorées.

Un autre but de la présente invention est de proposer un procédé qui permette d'obtenir des fibres creuses dont l'épaisseur de paroi et les diamètres interne et externe soient réduits à partir d'une filière donnée.

Un autre but de la présente invention est de proposer un procédé d'obtention de telles fibres creuses dans des conditions de simplicité, de productivité et de fiabilité améliorées.

D'autres avantages de la présente invention apparaîtront au cours de la description qui va suivre.

Il a maintenant été trouvé et ceci fait l'objet de la présente invention, une fibre creuse semi-perméable de type symétrique, obtenue et maintenue à l'état humide pour le traitement du sang, plus particulièrement par hémodialyse et/ou par ultrafiltration, présentant des caractéristiques de perméabilité à l'eau à partir du sang et d'hémocompatibilité sensiblement améliorées, constituée par un copolymère d'acrylonitrile et d'un comonomère oléfiniquement insaturé porteur de groupements sulfoniques éventuellement salifiés, caractérisée en ce que cette fibre présente la structure homogène microporeuse d'un gel obtenu essentiellement par l'abaissement de la température d'une solution dudit copolymère, à l'aide d'air ou d'un autre fluide inerte, non miscible aux constituants de ladite solution ledit état humide de la fibre étant obtenu par lavage et immersion de la fibre à l'état de gel en milieu aqueux.

Les fibres creuses selon l'invention sont obtenues par un procédé utilisant une composition contenant essentiellement

a) un copolymère d'acrylonitrile et un comonomère oléfiniquement insaturé porteur de groupements sulfoniques éventuellement salifiés,

b) un solvant organique polaire du copolymère,

c) un adjuvant mauvais solvant ou non solvant du copolymère, miscible au solvant et de préférence miscible à l'eau. Comme comonomère sulfonique de l'acrylonitrile on utilise généralement des produits de formule:

$CHR_1 = CR_3-A-Y$ (1) dans laquelle

Y représente un groupe $-SO_3H$ ou $-SO_3M$, M étant un atome métallique, de préférence un métal alcalin;

$R_1$ et $R_3$ représentent l'atome d'hydrogène ou un groupe méthyle;

A représente un lien valenciel, un groupe A' ou un groupe $-O-A'$

A' représente un groupement divalent hydrocarboné aliphatique saturé ou non saturé, droit ou ramifié, un noyau aromatique non substitué, ou une chaîne monoaromatique-monoaliphatique dans laquelle l'une des valences libres est portée par un atome de carbone aliphatique et l'autre par un atome de carbone du noyau aromatique.

Comme monomère sulfonique de l'acrylonitrile on peut citer plus spécifiquement les acides vinyl-sulfonique, allylsulfonique, méthallylsulfonique, styrénesulfonique, vinyloxybenzèsulfo-

nique, allyloxy- et méthallyloxybenzèsulfonique, allyloxy et méthallyloxyéthylsulfonique, ainsi que les sels de ces divers acides, de préférence leurs sels alcalins.

La proportion de comonomère sulfonique dans le copolymère d'acrylonitrile est généralement comprise entre 1 et 50% (en nombre) de motifs monomères sulfoniques et de préférence entre 3 et 15%. Les copolymères d'acrylonitrile ont une viscosité spécifique (mesurée à 25°C en solution à 2 g/litre dans le diméthylformamide) comprise habituellement entre 0,1 et 3, de préférence entre 0,5 et 1,5.

Comme solvant on utilise un solvant organique polaire ou un mélange de solvants organiques polaires, susceptible de former une solution filable avec le copolymère d'acrylonitrile et de comonomère sulfonique. Comme solvant organique polaire on utilise d'une manière générale des solvants connus vis-à-vis des copolymère d'acrylonitrile et de comonomère sulfonique, de préférence miscibles à l'eau. Plus spécifiquement on peut citer le diméthylsulfoxyde, le N,N-diméthylacétamide, le N-méthylpyrrolidone-2, le -butyrolactone et surtout le N,N-diméthylformamide (DMF).

Au lieu d'un solvant unique la solution peut être obtenue à partir d'un mélange de solvants.

Comme adjuvant on utilise un ou des éléments mauvais solvants ou non solvants du copolymère, miscibles au solvant ou au mélange de solvants et de préférence miscibles à l'eau.

L'adjuvant facilite la formation d'un gel thermoréversible obtenu par abaissement de la température de la solution ayant la composition définie ci-avant. Il ne contient pas d'élément susceptible de réagir avec des éléments de la composition qui conduiraient à la formation d'un gel non réversible, avant lavage.

Comme adjuvant on peut utiliser par exemple l'éthylène glycol, l'hexanediol, le diéthylène glycol et ses monoéthers tels que le 2-éthoxyéthanol, le 2-butoxyéthanol, l'urée. Toutefois on préfère utiliser l'eau et/ou surtout la glycérine pour leur absence de toxicité et leur commodité d'emploi.

Avantageusement on règle la concentration de la composition en glycérine à un niveau suffisant pour que la température de gélification de la composition soit légèrement supérieure à 100°C, ce qui permet un refroidissement de la solution filée en une fibre creuse gélifiée, simplement grâce à l'air à température ambiante.

Pratiquement les adjuvants sont employés en quantités telles dans la composition que la concentration en poids de copolymère est généralement supérieure à 5% et inférieure à 50%. Elle est de préférence comprise entre 20% et 40% en poids.

Le rapport en solvant sur adjuvant est généralement compris entre 100/1 à 0,1/1 en poids et est de préférence compris entre 10/1 et 1/1.

On porte la température de la composition ainsi définie à des valeurs supérieures à la température de gélification qui est généralement comprise entre 50°C et 150°C et de préférence entre 90°C et 130°C.

On mélange les différents constituants énoncés ci-avant, que l'on chauffe pour obtenir une solution homogène filable. On peut opérer de manière connue en soi dans tout appareil approprié, muni de moyens de chauffage et d'agitation tel qu'un dissoluteur ou de préférence une boudineuse.

La solution ainsi préparée peut être filée sous forme de fibres creuses par divers procédés connus en soi. La filière a généralement une forme annulaire. Elle est de préférence disposée selon un axe vertical. Elle comporte en outre un orifice axial permettant l'introduction à travers la filière d'air ou de gaz inerte avantageusement filtré, contribuant au soutien et à la mise en forme régulière du canal axial de la fibre creuse, en cours de formation.

On peut introduire l'air ou le gaz à température ambiante et à une pression voisine de la pression atmosphérique ou, avantageusement, en légère surpression, par exemple à une pression relative inférieure à 500 mm d'eau.

Les fibres creuses semi-perméables selon la présente invention sont obtenues essentiellement par filage à débit constant, le plus souvent à l'aide d'une pompe d'injection opérant sous pression, de la solution décrite ci-avant et par refroidissement de cette solution en-dessous de sa température de gélification.

La solution se transforme ainsi de l'état liquide à l'état de gel, c'est-à-dire à un état non fluide encore imprégné de solvant. Il y a en effet conservation dans le gel de tous les composants de la solution initiale. Eventuellement on peut observer de légères pertes de solvant ou de non solvant par évaporation, pertes qui sont généralement sans inconvénient.

Le facteur essentiel de la transformation de cette solution est l'abaissement de sa température qui entraîne une augmentation progressive de sa viscosité, ainsi que l'apparition de propriétés élastiques et qui conduit à une masse uniforme non fluide capable de conserver sa forme sous son propre poids. Cette transformation pourrait être le cas échéant réversible, tant que l'élimination du solvant n'a pas été effectué par lavage.

Le refroidissement peut être obtenu de préférence par simple contact avec l'air ambiant, ou bien par circulation forcée d'air, éventuellement préalablement refroidi, ou bien par action de tout autre fluide-liquide ou gazeux-inerte et non miscible par rapport aux constituants de la solution en cours de gélification.

Selon un mode de réalisation préféré, la solution s'écoule verticalement de la filière pendant le processus de gélification. Ce n'est que lorsque la fibre creuse a atteint un état de solidification suffisant lui permettant d'être sollicité mécaniquement tout en conservant sa forme, qu'elle est généralement prise en charge par un système mécanique comprenant notamment un ou plusieurs rouleaux entraîneurs. En pratique la distance et de préférence la hauteur entre la filière et le premier élément mécanique entrant en contact avec la fibre creuse après gélification est généralement comprise entre 1 cm et 10 mètres et de préférence entre 50 cm et 3 mètres.

Avantageusement on enroule la fibre creuse autour d'un premier rouleau entraîneur auquel on imprime une vitesse de rotation constante telle qu'il exerce sur la fibre creuse dès sa sortie de la filière, alors que la composition est encore à l'état fluide, un étirage longitudinal dit primaire.

On observe que cet étirage primaire entraîne simultanément une réduction des diamètres interne et surtout externe de la fibre creuse, donc une sensible réduction de son épaisseur. Il est ainsi possible d'obtenir de fines fibres creuses à l'aide de filières ayant un ou des orifices annulaires relativement larges, ce qui simplifie leur construction et améliore leur régularité de fonctionnement. En outre le débit de production de la fibre creuse peut être considérablement augmenté. Le taux d'étirage primaire est en effet généralement compris entre 1/1 et 20/1 et de préférence entre 2/1 et 10/1.

Cette réduction de l'épaisseur de la paroi de la fibre creuse favorise un refroidissement rapide de la composition. Cette transformation conduit à une structure microporeuse, homogène, sans peau, les pores étant encore imprégnés des éléments solvant et adjuvant.

On les élimine alors par lavage.

La structure microporeuse obtenue, avant lavage, selon la présente invention est formée, à l'état de gel, d'une masse ayant globalement conservé tous les constituants de la solution initiale, contrairement aux procédés faisant appel soit à l'évaporation du solvant, soit à l'extraction du solvant d'une solution polymérique par un agent de coagulation (non solvant du polymère miscible au solvant). Selon la présente invention on évite l'emploi d'un coagulant, ce qui permet d'obtenir les effets avantageux qui seront développés plus loin.

On élimine les résidus non polymériques, notamment le solvant et l'adjuvant, par lavage de la fibre creuse alors qu'elle est à l'état de gel, c'est-à-dire non fluide, en l'immergeant dans un bain de lavage. On notera que ce bain ne pourrait avoir un effet de coagulation que dans la mesure où la fibre creuse serait encore à l'état fluide et non déjà transformée en gel.

Ce lavage peut être réalisé en une ou en plusieurs étapes encadrant un deuxième traitement par étirage dit «secondaire». Comme bain de lavage, on utilise généralement un mélange aqueux de solvants organiques, notamment d'alcools tels que le méthanol, mais on préfère utiliser l'eau pure. Généralement la température du ou des bains de lavage est comprise entre 0° et 100°C et de préférence entre 10° et 50°C. Le temps de séjour de la fibre creuse dans le ou les bains de lavage est généralement compris entre 5 secondes et 5 minutes et de préférence entre 30 secondes et 2 minutes.

Le traitement de lavage, avant étirage secondaire a généralement pour effet d'augmenter la rigidité de la fibre creuse et de diminuer quelque peu sa perméabilité, ce qui montre qu'il n'y a pas de processus sensible de coagulation.

Avantageusement, on augmente la porosité des fibres creuses et l'on règle ainsi leur perméabilité dans le domaine désiré en fonction des applications envisagées en leur faisant subir un nouvel étirage longitudinal, dit secondaire. Cet étirage est effectué alors que la fibre creuse est immergée dans un milieu aqueux, par exemple dans de l'eau, ou dans un mélange eau/solvant. La température du bain d'étirage est généralement comprise entre 50°C et 100°C et de préférence entre 80°C et 100°C. Le taux d'étirage secondaire est généralement compris entre 1/1 et 10/1 et de préférence compris entre 1,5/1 et 6/1.

Pour conférer aux fibres étirées une bonne stabilité dimensionnelle dans le temps, il est avantageux de leur faire subir un traitement de relaxation. Pour cela on les fait passer dans un ou plusieurs bains successifs d'eau dont la température est supérieure à la température d'utilisation et/ou de conservation de la fibre. Généralement la température du bain est comprise entre 40°C et 100°C et de préférence entre 80°C et 100°C. La fibre creuse est généralement guidée entre l'entrée et la sortie du bain par des rouleaux dont on règle les vitesses relatives de sorte qu'elle est constamment maintenue immergée et détendue.

Ce bain de relaxation permet en outre d'effectuer un lavage complémentaire de la fibre creuse et d'éliminer les traces de résidus non polymériques. Le temps de séjour de la fibre creuse dans le bain de relaxation et/ou lavage est généralement inférieur à une minute.

La fibre creuse selon la présente invention doit être conservée à l'état humide en milieu aseptique, par exemple dans de l'eau formolée. On peut aussi l'imprégner d'un rétenteur d'eau tel que l'éthylèneglycol ou de préférence la glycérine, selon des techniques connues en soi.

Les fibres creuses sélectivement perméables selon l'invention sont du type symétrique et ont une structure microporeuse, homogène, sensiblement uniforme dans toute leur épaisseur. Les micropores ont un diamètre moyen généralement inférieur à 100 A, ce diamètre moyen étant déterminé par la méthode de D.M. Green et Coll. décrite dans Trans. Amer. Soc. Artif Int. Organs, page 627 et suivantes, 1976. Le taux de vide est en outre le plus souvent compris entre 40% et 85% et de préférence entre 60% et 80%. Les fibres creuses sont généralement exemptes de vacuoles (espaces vides inclus dans la paroi et dont la plus grande dimension est supérieure à 5 microns environ). Elles ne comportent pas de peau, ni de couche dense en surface, à l'intérieur, comme à l'extérieur.

Les fibres creuses ont un diamètre extérieur généralement compris entre 50 et 2000 µm et de préférence entre 100 et 500 µm. L'épaisseur de paroi est généralement comprise entre 3% et 30% du diamètre extérieur, soit généralement entre 5 et 200 µm et de préférence entre 10 et 80 µm.

La présente invention fournit des fibres creuses dont les parois, notamment les parois internes, présentent à échelle microscopique un état de surface remarquablement lisse, continu et homogène, même à très fort grossissement.

La présente invention permet d'obtenir de façon surprenante des fibres creuses pratiquement dépourvues de rugosités, en creux ou en relief; notamment de rugosités dépassant une hauteur de 0,3 μm environ par rapport à la surface moyenne, à la différence de fibres creuses obtenues selon le brevet américain no 4 056 467.

De telles aspérités, si elles existent, restent toutefois exceptionnelles; par exemple l'intérieur de chaque fibre d'un hémodialyseur tel que décrit dans les exemples ci-après ne possède au maximum que 1 ou 2 aspérités de ce genre.

Préférentiellement, la surface interne des fibres creuses selon l'invention peut présenter des irrégularités de relief dont la hauteur (ou la profondeur) n'excède pas 0,1 μm.

En outre, ces irrégularités de relief n'ont généralement pas de bord abrupt ou d'angle vif à échelle microscopique, mais elles peuvent constituer des micro-ondulations, le plus souvent anisotropes dans le plan de la surface de la fibre creuse, et se raccordant progressivement entre elles, de manière continue.

Si l'on désigne par h la hauteur moyenne de ces ondulations et par 1 leur largeur moyenne, on observe que les fibres creuses selon l'invention ont une paroi interne pour laquelle le rapport

$\dfrac{h}{l}$ est généralement inférieur à 25% et de préférence inférieur à 15%.

On pense que l'excellent état de la surface interne des fibres creuses selon la présente invention contribue de façon très sensible à diminuer les risques d'adhésion plaquettaire sur les parois, les plaquettes ayant des dimensions de l'ordre de 2 microns. On évite, ou l'on retarde considérablement ainsi la formation de caillots susceptibles de provoquer ensuite éventuellement des thromboses.

On observe ainsi, comme le montrent les exemples no 6, 7 et 8 une meilleure hémocompatibilité des fibres creuses selon l'invention, qui se traduit par des résultats relativement bien meilleurs, obtenus lors d'essais in-vivo.

Exemple no 1

On charge dans un dissoluteur sous atmosphère d'azote:

- 210 g d'un copolymère d'acrylonitrile et de méthallylsulfonate de sodium comprenant 3,2% en nombre de comonomère sulfonique.

La viscosité specifique du copolymère est de 0,95.

- 312 g de N,N-diméthylformamide.
- 78 g de 2-butoxyéthanol.

On agite pendant 2 heures, on chauffe à 145°C et l'on maintient l'agitation pendant encore 2 heures. On arrête l'agitation pour éviter l'entraînement de bulles et l'on introduit la composition obtenue par une pompe à engrenages dans une filière à fente annulaire ⌀ 860/590 μm, munie d'un orifice axial ⌀ 370 μm pour l'introduction d'air, l'ensemble étant muni de moyens de chauffage maintenant la composition à une température de 128°C.

La fibre creuse naissante parcourt verticalement une distance de 160 cm dans l'air ambiant, parcours pendant lequel se forme un gel solide susceptible de s'enrouler autour de rouleaux de guidage et d'étirage primaire, sans subir de déformation permanente.

On la soumet alors à un étirage secondaire avec immersion dans un bain d'eau à 98°C, puis successivement à un premier lavage à l'eau à température ambiante, à un traitement de stabilisation par immersion dans un bain d'eau à 95°C et à un deuxième lavage à l'eau à température ambiante, après quoi on la stocke, à l'état humide sur bobines.

Si l'on opère successivement selon la présente invention et selon le brevet américain no 4 056 467, dans des conditions aussi proches que possible, notamment à l'aide de filière identiques, on obtient les conditions de marche et les résultats figurant dans le tableau I ci-après:

Tableau I

| | Selon l'invention | Selon USP 4 056 467 |
|---|---|---|
| Débit pompe à engrenages | 1,75 cm³/mn | 3,5 cm³/mn |
| Débit d'air | 6,2 cm³/mn | — |
| Vitesse sortie filière | 5,8 m/mn | — |
| Vitesse levée gel ou fibre coagulée | 29 m/mn | 9 m/mn |
| Taux d'étirage (secondaire) après stabilisation | 2,3 | 2,2 |
| Epaisseur fibres et ⌀ ext./⌀ int. | 22 μ (280/236) | 74 μ (443/295) |
| Capacité d'ultrafiltration | | |
| – Débit d'eau salée (9 g/l de ClNa) à 20°C sous 0,5 bar | 265 l/j. m² | 150 l/j. m² |
| – Taux de rejet bovalbumine | 100% | 100% |

On observe ainsi que la présente invention permet d'obtenir avec une bien meilleure productivité (29 m/mn contre 9 m/mn à partir d'un débit de solution inférieur de moitié) une fibre creuse plus mince ayant un taux d'ultrafiltration plus élevé, tout en rejetant également à 100% la bovalbumine.

## Exemple no 2

On prépare successivement 3 fibres creuses.

Une fibre creuse A selon l'invention, dans les conditions de l'exemple 1;

une fibre creuse B selon l'invention, dans les conditions de l'exemple 1, mais avec un étirage secondaire supplémentaire analogue au précédent; enfin, une fibre creuse C selon le brevet américain no 4 056 467.

Pour des fibres glycérinées, on obtient les conditions de 165012 marche et les résultats figurant dans le tableau II ci-après:

Tableau II

|  | Fibre A | Fibre B | Fibre C |
|---|---|---|---|
| Taux d'étirage primaire | 2,6 | 2,6 | — |
| Taux 1er étirage secondaire | 3,8 | 1,9 | 4 |
| Taux 2èm étirage secondaire | — | 2,4 | — |
| Taux d'étirage global stabilisé | 3,05 | 3,8 | 2,9 |
| Epaisseur de la fibre | 32 µm | 31 µm | 76 µm |
| ($\varnothing$ ext./$\varnothing$ int.) | (298/234) | (313/251) | (440/288) |
| Débit d'eau salée (9 g/l de ClNa à 40°C) en litre/jour. m² sous 0,5 bar | 218 | 189 | 160 |
| Caracteristiques mécaniques: |  |  |  |
| – Module d'élasticité E (kg/mm²) | 49 | 60 | 34 |
| – Allongement à la rupture % | 38 | 30 | 58 |
| – Résistance à la rupture R (kg/mm²) | 3,4 | 4,5 | 1,45 |

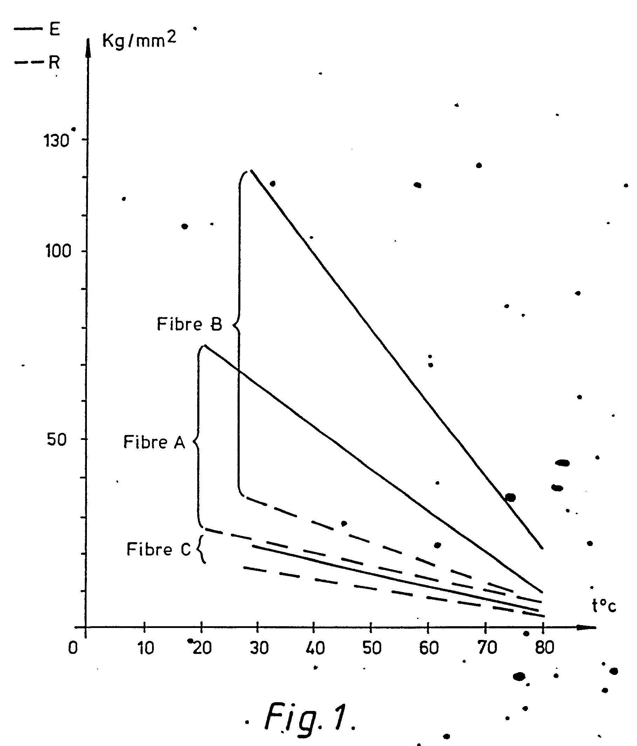

La figure 1 représente les valeurs de R et de E en fonction de la température, pour des fibres creuses A, B, C immergées dans l'eau et non glycérinées. On observe d'une part une nette supériorité sur le rapport à la fibre C. On observe d'autre part que l'étirage supplémentaire subi par la fibre B améliore très sensiblement ses propriétés mécaniques, toutefois au prix d'une légère baisse du débit d'ultrafiltration.

## Exemple no 3

On charge:
- 1050 g du copolymère selon l'exemple 1,
- 1560 g de N,N-diméthylformamide,
- 390 g de 2-butoxyéthanol,

qu'on mélange convenablement pendant 6 heures à une température de 50°C et qu'on introduit dans une boudineuse munie d'une vis d'alimentation de diamètre 2,5 cm et de longueur: 50 cm.

La boudineuse alimente une pompe de tirage qui débite dans une filière percée d'un orifice annulaire $\varnothing$ 1200/860 µm avec arrivée d'air axiale par un orifice de $\varnothing$ 500 µm, l'ensemble étant thermostaté à 125°C.

La vitesse de la fibre creuse à la sortie de l'étirage primaire est de 20 m/mn et le taux d'étirage primaire est de 4. Le taux d'étirage secondaire, dans l'eau à 98°C est de 3,8, ramenée à 2,4 après stabilisation dans l'eau à 98°C. On obtient une fibre creuse $\varnothing$ int = 302 µm, d'épaisseur 50 µm.

On fabrique un hémodialyseur constitué essentiellement par un faisceau de 5000 fibres de surface utile 0,86 m². On mesure:
- la clairance sur la vitamine B 12: K = 60 ml.mn⁻¹,

– la pente d'ultrafiltration, soit: UF = 31 ml × h⁻¹ × mmHg.

## Exemple no 4

On soumet la même composition qu'à l'exemple 3 à un taux d'étirage primaire de 4. La vitesse de la solution en sortie de filière est de 25 m/min. L'étirage secondaire a un taux de 4, ramené à 2,8 après stabilisation dans l'eau à 98°C.

On fabrique un hémodialyseur constitué par un faisceau de 6000 fibres creuses de surface utile 1,14 m². Les fibres ont un diamètre intérieur de 290 µm et une épaisseur de 50 µm.

On mesure:
- la clairance urée: K = 168 ml × mn⁻¹
- la clairance B 12: K = 79 ml × mn⁻¹,
- la pente d'ultrafiltration: UF = 44 ml × h⁻¹ × mm Hg.

Ces performances obtenues in vitro se comparent avantageusement à celles fournies par les meilleurs hémodialyseurs actuellement disponibles.

## Exemple no 5

On prépare une fibre creuse selon la présente invention dans les mêmes conditions que celles de l'exemple no 4, mais en remplaçant le 2-butoxyéthanol par une même quantité de glycérine. Par ailleurs on prépare une fibre creuse de référence, avec la même composition polymérique, dans les conditions du brevet américain no 4 056 467.

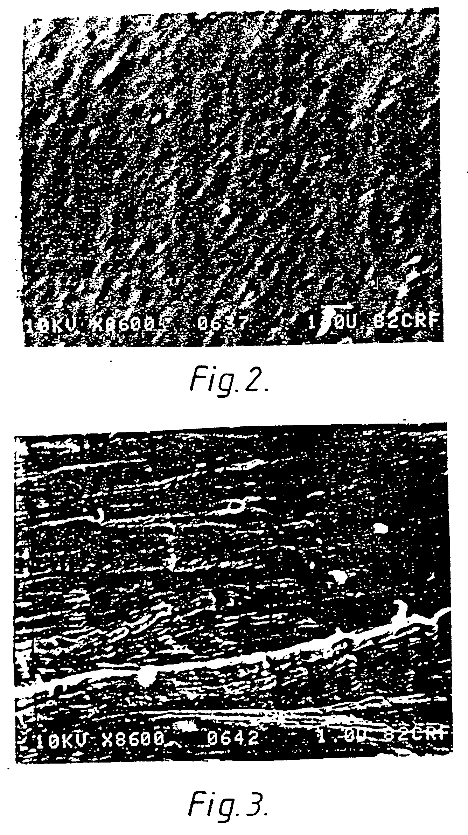

La figure 2 représente une photographie obtenue sur microscope électronique à balayage (grossissement 8600 ×) d'un échantillon de la paroi interne de la fibre creuse ainsi préparée, selon l'invention.

La figure 3 représente une photographie obtenue dans les mêmes conditions et avec le même grossissement, d'un échantillon de la paroi interne de la fibre creuse de référence.

A ce très fort grossissement on remarque que la fibre creuse selon l'invention a une surface lisse, continue, pratiquement dépourvue d'aspérités, alors que la fibre creuse de référence offre une surface rugueuse faisant apparaître des discontinuités. Le tiret blanc en bas à droite de chaque photographie correspond à une longueur de un μm.

Exemple no 6

On prépare deux hémodialyseurs A et B.

L'hémodialyseur A comporte 5000 fibres creuses de longueur utile 21 cm, de diamètres externe/interne 336/262 μm, obtenues par coulée d'une composition analogue à celle de l'exemple no 3 dans laquelle on a remplacé le 2-butoxyéthanol par une même quantité de glycérine, avec une vitesse en sortie d'étirage primaire de 16 m/mn, et un taux d'étirage secondaire de 4,7, ramené à 2,8 après stabilisation.

L'hémodialyseur B sert de témoin. Il est analogue au précédent et n'en diffère que par les fibres creuses, de diamètres externe/interne 450/300 μm, préparés selon le brevet américain no 4 056 467.

On effectue pendant 3 heures un traitement d'hémodialyse sur un chien hépariné de 20 kg, les deux hémodialyseurs A et B étant disposés et alimentés simultanément en parallèle.

On maintient un débit de sang de 200 ml/min et un débit d'ultrafiltration de 10 ml/min dans chaque hémodialyseur et l'on règle les quantités d'héparine pour obtenir un fonctionnement simultané et permanent des deux hémodialyseurs, alors que le taux d'hématocrite s'élève de 27% à 32%.

On observe que pendant la durée de l'essai, la perte de charge du circuit sang à travers l'hémodialyseur A reste toujours inférieure à 20 mmHg, alors que pour l'hémodialyseur B, elle s'élève très rapidement à 240 mmHg puis reste supérieure à 180 mmHg.

En outre, après rinçage avec 500 ml de sérum physiologique, l'hémodialyseur A est propre, alors que les extrémités des fibres creuses de l'hémodialyseur B restent couvertes de fibrine.

Exemple no 7

On prépare un hémodialyseur C comportant 6000 fibres creuses de longueur utile 21 cm, de diamètres externe/interne: 400/300 μm, obtenues par coulée d'une composition analogue à celle utilisée dans la préparation de l'hémodialyseur A de l'exemple no 6, avec toutefois une vitesse de sortie d'étirage primaire de 25 m/min et un taux d'étirage secondaire de 4, ramené à 2,6 après stabilisation.

L'hémodialyseur de référence D est un appareil largement utilisé; il s'agit d'un modèle C-DAK-1,3 D équipé de fibres creuses en acétate de cellulose de surface utile 1,3 m², vendu par la Société américaine Cordis Dow Corporation.

On effectue un traitement d'hémodialyse sur chien de 20 kg dans des conditions analogues à celles de l'exemple no 6, les hémodialyseurs C et D étant disposés en parallèle.

On observe que pendant le traitement de 3 heures, la perte de charge du circuit sang à travers l'hémodialyseur C reste comprise entre 20 et 30 mmHg, alors que pour l'hémodialyseur témoin D, elle s'élève rapidement à 60 mmHg, puis se maintient entre 55 et 60 mmHg.

On observe en outre, après rinçage des hémodialyseurs, un volume résiduel de sang de:

– 14 ml pour l'hémodialyseur C

– 23 ml pour l'hémodialyseur D.

On notera que ces chiffres sont élevés, car il s'agit d'un essai sur chien avec un taux d'hématocrite relativement élevé, croissant de 29% à 39%.

Exemple no 8

On prépare un hémodialyseur E comportant 6000 fibres creuses de longueur utile 21 cm, de diamètres externe/interne 390/290 μm, obtenues de manière analogue à l'exemple précédent.

L'hémodialyseur témoin F est un appareil Filtryzer type B2M équipé de fibres creuses en polyméthacrylate de méthyle, vendu par la Société japonaise Toray Industries Inc.

On procède dans des conditions analogues à celles de l'exemple no 7 et l'on observe que la perte de charge du circuit sang à travers l'hémodialyseur E reste comprise entre 20 et 27 mmHg, alors que pour l'hémodialyseur témoin F, elle s'élève progressivement à 50 mmHg et se maintient au-dessus de 45 mmHg. Les volumes résiduels de sang après rinçage sont respectivement de 1,9 et 3,6 ml pour les hémodialyseurs E et F.

Les exemples ci-avant illustrent comment peuvent être atteints les buts assignés à la présente invention.

**Revendications**

1. Fibre creuse semi-perméable de type symétrique, obtenue et maintenue à l'état humide pour le traitement du sang, plus particulièrement par hémodialyse et/ou par ultrafiltration, présentant des caractéristiques de perméabilité à l'eau à partir du sang et d'hémocompatibilité sensiblement améliorées, constituée par un copolymère d'acrylonitrile et d'un comonomère oléfiniquement insaturé porteur de groupements sulfoniques éventuellement salifiés, caractérisé en ce que cette fibre présente la structure homogène microporeuse d'un gel obtenu essentiellement par l'abaissement de la température d'une solution dudit copolymère à l'aide d'air ou d'un autre fluide inerte, non miscible aux constituants de ladite solution, ledit état humide de la fibre étant obtenu par lavage et immersion de la fibre à l'état de gel en milieu aqueux.

2. Fibre creuse selon la revendication 1, caractérisée en ce qu'elle présente une surface interne lisse à échelle microscopique, étant pratiquement dépourvue de rugosité de hauteur supérieure à 0,3 μm.

3. Fibre creuse selon la revendication 1 ou 2, caractérisée en ce que la surface interne est continue et peut présenter, à échelle microscopique, des micro-ondulations dont la pente est inférieure à 25%.

4. Procédé de préparation de fibres creuses selon la revendication 1, 2 ou 3, suivant lequel on effectue les étapes suivantes:

a) On forme une composition à partir d'un copolymère d'acrylonitrile et d'un comonomère oléfiniquement insaturé porteur de groupements sulfoniques éventuellement salifiés, d'un solvant organique polaire et d'un adjuvant, mauvais solvant ou non solvant du copolymère, miscible au solvant ou au mélange de solvants et de préférence miscible à l'eau et qui ne contient pas d'élément susceptible de réagir avec des éléments de ladite composition qui conduiraient à la formation d'un gel non réversible avant lavage.

b) On porte cette composition à l'état de solution homogène filable à une température supérieure à sa température de gélification.

c) On injecte ladite solution à travers une filière et on refroidit la fibre creuse ainsi formée jusqu'à l'obtenir à l'état de gel.

d) On lave la fibre creuse à l'état de gel pour en éliminer les résidus non polymériques.

5) Procédé selon la revendication 4, caractérisé en ce que le refroidissement de ladite solution jusqu'à l'état de gel est obtenu par contact des parois interne et externe avec de l'air ambiant.

6. Procédé selon l'une des revendications 4 ou 5, caractérisé en ce que l'on fait subir à la fibre creuse dès sa sortie de filière un étirage longitudinal primaire dont le taux est compris entre 1/1 et 20/1.

7. Procédé selon l'une des revendications 4 à 6, caractérisé en ce que l'on fait subir à la fibre creuse au moins un étirage longitudinal secondaire dont le taux est compris entre 1/1 et 10/1, alors qu'elle est immergée dans un bain aqueux dont la température est comprise entre 50°C et 100°C.

8. Procédé selon l'une des revendications 6 ou 7, caractérisé en ce que l'on fait subir à la fibre creuse, après étirage, un traitement de relaxation par immersion dans au moins un bain d'eau dont la température est comprise entre 40°C et 100°C.

9. Procédé selon l'une quelconque des revendications 4 à 8, caractérisé en ce que ladite composition comprend un copolymère d'acrylonitrile et de méthallylsulfonate de sodium.

10. Hémodialyseur, Hémofiltre, Ultrafiltre ou appareil de plasmaphérèse équipé au moins en partie de fibres creuses selon l'une des revendications 1 à 3, ou de fibres creuses obtenues par un procédé selon l'une des revendications 4 à 9.

**Patentansprüche**

1. Semipermeable Hohlfaser vom symmetrischen Typ, die in feuchtem Zustand für die Behandlung von Blut, insbesondere durch Hämodialyse und/oder Ultrafiltration, erhalten und gehalten wird, mit wesentlich verbesserter Permeabilität für Wasser aus dem Blut und verbesserter Hämokompatibilität, bestehend aus einem Kopolymeren aus Acrylnitril mit einem olefinisch ungesättigten Komonomeren, das Träger von gegebenenfalls in Salzform vorliegenden sulfonischen Gruppen ist, dadurch gekennzeichnet, dass die Faser eine homogene mikroporöse Struktur eines Gels hat, das im wesentlichen durch Erniedrigen der Temperatur einer Lösung dieses Kopolymeren mittels Luft oder eines anderen inerten Fluids erhalten wird, das mit den Bestandteilen dieser Lösung nicht vermischbar ist, wobei der feuchte Zustand der Faser durch Waschen und Eintauchen der Faser im Gelzustand in ein wässriges Medium erhalten wird.

2. Hohlfaser gemäss Anspruch 1, dadurch gekennzeichnet, dass sie eine innere Oberfläche aufweist, die im mikroskopischen Massstab glatt ist und praktisch frei von Unebenheiten mit einer Höhe oberhalb 0,3 μm ist.

3. Hohlfaser gemäss Anspruch 1 oder 2, dadurch gekennzeichnet, dass die innere Oberfläche stetig ist und im mikroskopischen Massstab Mikrowellen mit einer Neigung unterhalb 25% aufweisen kann.

4. Verfahren zur Herstellung der Hohlfasern gemäss Anspruch 1, 2 oder 3, gemäss dem man die folgenden Schritte durchführt:

a) Man bildet eine Zusammensetzung ausgehend von einem Kopolymeren des Acrylnitrils und einem olefinisch ungesättigten Komonomeren, das Sulfongruppen gegebenenfalls in Salzform trägt, einem polaren organischen Lösungsmittel und einem Hilfsmittel, das ein schlechtes oder kein Lösungsmittel für das Kopolymere ist, und mit dem Lösungsmittel oder einem Gemisch der Lösungsmittel mischbar ist und vorzugsweise mit Wasser mischbar ist, und das keinen Bestandteil enthält, der mit den Bestandteilen dieser Zusammensetzung reagieren könnte, was zur Bildung eines nicht reversiblen Gels vor dem Waschen führen würde,

b) man bringt diese Zusammensetzung in den Zustand einer homogenen Lösung, die bei einer Temperatur oberhalb seiner Gelbildungstemperatur verspinnbar ist,

c) man spritzt diese Lösung durch eine Spinndüse, und kühlt die so gebildete hohle Faser ab, bis man sie im Gelzustand erhält,

d) man wäscht die hohle Faser im Gelzustand, um daraus nichtpolymere Reste zu entfernen.

5. Verfahren gemäss Anspruch 4, dadurch gekennzeichnet, dass das Abkühlen der Lösung bis zum Gelzustand erzielt wird durch Kontakt der inneren und äusseren Wände mit der Umgebungsluft.

6. Verfahren gemäss einem der Ansprüche 4 oder 5, dadurch gekennzeichnet, dass man die Hohlfaser von ihrem Austritt aus der Spinndüse an einem primären Längsverstrecken unterwirft, dessen Wert zwischen 1/1 und 20/1 liegt.

7. Verfahren gemäss einem der Ansprüche 4 bis 6, dadurch gekennzeichnet, dass man die Hohlfaser mindestens einem zweiten Längsverstrecken unterwirft, dessen Wert zwischen 1/1 und 10/1 liegt, während sie in ein wässriges Bad getaucht wird, dessen Temperatur zwischen 50°C und 100°C liegt.

8. Verfahren gemäss einem der Ansprüche 6 oder 7, dadurch gekennzeichnet, dass man die Hohlfaser nach dem Verstrecken einer Entspannungsbehandlung durch Eintauchen in wenigstens ein Wasserbad, dessen Temperatur zwischen 40 und 100°C liegt, unterwirft.

9. Verfahren gemäss einem der Ansprüche 4 bis 8, dadurch gekennzeichnet, dass die Zusammensetzung ein Kopolymeres von Acrylnitril und Natriummethallylsulfonat umfasst.

10. Hämodialysator, Hamofilter, Ultrafilter oder Plasmaphorese-Vorrichtung, ausgestattet mindestens zum Teil mit den Hohlfasern gemäss einem der Ansprüche 1 bis 3 oder den Hohlfasern, die nach einem Verfahren gemäss einem der Ansprüche 4 bis 9 erhalten wurden.

**Claims**

1. Semi-permeable hollow fibre of a symmetrical type, obtained and maintained in a wet state for the treatment of blood, especially by haemodialysis and/or by ultrafiltration, having substantially improved permeability to water from blood and improved hemocompatibility characteristics, consisting of a copolymer of acrylonitrile with an olefinically unsaturated comonomer carrying sulphonic groups, optionally in salt form, characterized in that said fibre is possessed of a homogeneous microporous structure of a gel which is essentially obtained by lowering the temperature of a solution of said copolymer by means of air or another inert fluid which is immiscible with the constituents of said solution, said wet state of the fibre being that which is obtained by washing and immersing the gelled fibre in an aqueous medium.

2. Hollow fibre according to Claim 1, characterized in that it has an inner surface which is smooth on a microscopic scale, being practically free from roughness of a height in excess of 0.3 μm.

3. Hollow fibre according to Claim 1 or 2, characterized in that the inner surface is continuous and may have, on a microscopic scale, microundulations whose gradient is less than 25%.

4. Process for preparing hollow fibres according to Claim 1, 2 or 3, according to which the following stages are performed:

a) A composition is prepared from a copolymer of acrylonitrile with an olefinically unsaturated comonomer carrying sulphonic groups, optionally in salt form, a potar organic solvent and an adjuvant which is a poor solvent or is not a solvent for the copolymer, is miscible with the solvent or the mixture of solvents and is preferably miscible with water and which does not contain any component capable of reacting with the components of the said composition which components would result in the formation of an irreversible gel before washing.

b) This composition is brought into the state of a homogeneous solution which can be spun at a temperature above its gel temperature,

c) The said solution is injected through a die and the hollow fibre thus formed is cooled until it is obtained in a gel state,

d) The hollow fibre is washed in the gel state to remove nonpotymeric residues therefrom.

5. Process according to Claim 4, characterized in that cooting of the said solution to the gel state is obtained by the contact of the inner and outer walls with the surrounding air.

6. Process according to one of Claims 4 or 5, characterized in that, as it leaves the die, the hollow fibre is subjected to a primary tengthwise drawing in a ratio of between 1/1 and 20/1.

7. Process according to one of Claims 4 to 6, characterized in that the hollow fibre is subjected to at least one secondary lengthwise drawing in a ratio of between 1/1 and 10/1, while it is immersed in an aqueous bath at a temperature between 50°C and 100°C.

8. Process according to one of Claims 6 or 7, characterized in that, after drawing, the hollow fibre is subjected to a relaxation treatment by immersion in at least one water bath at a temperature between 40°C and 100°C.

9. Process according to any one of Claims 4 to 8, characterized in that the said composition comprises a copolymer of acrytonitrile with sodium methallylsulphonate.

10. A haemodialyser, blood fitter or ultrafilter or plasmapheresis apparatus at least partly equipped with hollow fibres according to one of Claims 1 to 3, or with hollow fibres obtained by a process according to one of Claims 4 to 9.

Fig.1.

Fig.2.

Fig.3.